# EUROPEAN PATENT APPLICATION

(11) **EP 2 833 580 A1**
(43) Date of publication of application: **04.02.2015**
(21) Application number: 13768739.8
(22) Date of filing: 29.03.2013
(51) Int. Cl.: H04L 12/70

(54) **SERVICE SCHEDULING METHOD AND SYSTEM**

(30) Priority: 30.03.2012 CN 201210090486
(71) Applicant: ZTE Corporation, Shenzhen, Guangdong 518057 (CN)
(72) Inventor: ZHAO, Lina, Shenzhen Guangdong 518057 (CN)
(74) Representative: Tischner, Oliver
(86) International application number: PCT/CN2013/073506
(87) International publication number: WO 2013/143496

(57) **Abstract**

The disclosure provides a method and system for implementing service scheduling, which can be used for slicing different services into slices and encapsulating the slices into a uniform signal format, and crossly scheduling the slices which are encapsulated into a uniform signal format, and conducting service reorganization on the crossly-scheduled slices. The technology of implementing service scheduling uniformly encapsulates different services by a uniform slice mechanism, so as to implement the uniform cross scheduling of service for different transmission networks, and has high integration and broader scope of service to be applied; meanwhile, it increases the flexibility of network configuration, reduces the operating cost of service change and enhances the product competitiveness.

## Description

### TECHNICAL FIELD

The disclosure relates to the field of communications, and in particular to a method and system for implementing service scheduling.

### BACKGROUND

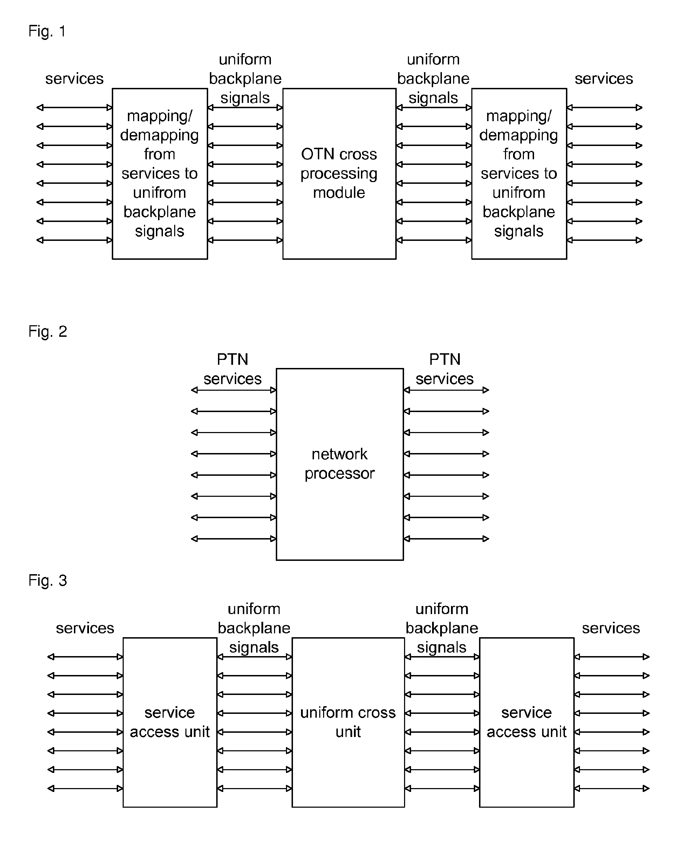

Optical Transport Network (OTN) equipment and Packet Transport Network (PTN) equipment are mainstream products of communication equipment. As shown in Fig.1, conventional OTN equipment implements free scheduling of service through cross processing after mapping service into Optical Data Unit K (ODUk) or flex Optical Data Unit (ODUflex). As shown in Fig.2, conventional PTN equipment allocates service to various areas by a network processor.

So far, both kinds of equipment discussed above are however not compatible. When operating companies desire to support PTN and OTN scheduling at the same time, they need to purchase two sets of equipment simultaneously, which leads to immense operating cost.

### SUMMARY

In view of the above, the main objective of the disclosure is to provide a method and system for implementing service scheduling to implement a uniform cross scheduling for different transmission networks, thus reducing the cost.

In order to accomplish the objective discussed above, the technical solution of the disclosure is realized as follows.

A method for implementing service scheduling includes:
slicing different services into slices and encapsulating the slices into a uniform signal format; crossly scheduling the slices which are encapsulated into the uniform signal format, and conducting service reorganization on the slices which have been completed the cross scheduling.

The step of slicing different services into slices and encapsulating the slices into a uniform signal format may include:
classifying the services, slicing the services of various types into the slices and encapsulating the slices into a uniform frame.

The step of conducting service reorganization on the slices which have been completed the cross scheduling may include re-encapsulating the slices of different types of services according to corresponding types of the services.

The slice may include expenditure and payload, in which the expenditure may include a source address, a destination address, a service flag, a slice serial number and ODU feature information; and
the source address may be composed of a source service access unit address and a source port, the destination address may be composed of a destination service access unit address and a destination port; the ODU feature information may include ODU type, rate and locating information, and the ODU feature information, the slice serial number and the service flag implement classification and reorganization of services.

The step of crossly scheduling the slices which are encapsulated into a uniform signal format may include crossly scheduling the slices according to the expenditure contained in the slices by using a slice cross matrix;

The method also may include buffering in a course in which slice transmission is needed.

A system for implementing service scheduling includes a service access unit and a uniform cross unit; wherein
the service access unit is configured to slice different services into slices and encapsulate the slices into a uniform signal format, and conduct service reorganization on the slices which have been completed cross scheduling;
the uniform cross unit is configured to crossly schedule the slices which are encapsulated into a uniform signal format.

While slicing different services into slices and encapsulating the slices into a uniform signal format, the service access unit is configured to classify the services, slice various types of services into slices and encapsulate the slices into a uniform frame.

The service access unit may include a service classifying module and a service slice encapsulating module; wherein
the service classifying module is configured to classify the services;
the service slice encapsulating module configured to slice the services of various types into slices and encapsulate the slices into a uniform frame.

While performing service conducting service reorganization on the slices which have been completed the cross scheduling, the service access unit may be configured to, re-encapsulate the slices of different types of services according corresponding types of the services.

The service access unit may include a slice classifying module and a slice reorganization module; wherein
the slice classifying module is configured to perform service classification on the received slices; and
the slice reorganization module is configured to re-encapsulate the slices of different types of services which have been completed the service classification, according corresponding types of the services.

The slice may include expenditure and payload, in which the expenditure may include a source address, a destination address, a service flag, a slice serial number and ODU feature information;
the source address is composed of a source service access unit address and a source port, the destination address is composed of a destination service access unit address and a destination port; the ODU feature information may include ODU type, rate and locating information, and the ODU feature information, the slice serial number and the service flag implement classification and reorganization of services.

The uniform cross unit may include a slice cross matrix; while crossly scheduling the slices which are encapsulated into a uniform signal format, the uniform cross unit is configured to crossly schedule the slices according to the expenditure contained in the slices by using a slice cross matrix;
the system also may include a buffer queue module configured to perform buffering in a course in which slice transmission is needed.

The technology of implementing service scheduling uniformly encapsulates different services by a uniform slice mechanism to implement the uniform cross scheduling of services for different transmission networks, and has high integration and even more broad scope of service to be applied; meanwhile, it increases the flexibility of network configuration, reduces the operating cost of service change and enhances the product competitiveness.

### BRIEF DESCRIPTION OF THE DRAWINGS

Fig. 1 is a schematic diagram of the scheduling principle of a conventional OTN service;
Fig. 2 is a schematic diagram of the scheduling principle of a conventional PTN service;
Fig. 3 is a schematic diagram of equipment which can freely schedule OTN, PTN according to an embodiment of the disclosure;
Fig. 4 is a schematic diagram of a service access unit which can freely schedule OTN, PTN according to an embodiment of the disclosure;
Fig. 5 is a schematic diagram of a uniform slice structure according to an embodiment of the disclosure;
Fig. 6 is a schematic diagram of a uniform cross unit according to an embodiment of the disclosure;
Fig. 7 is a schematic diagram of the principal of service scheduling according to an embodiment of the disclosure; and
Fig. 8 is a flow chart of service scheduling according to an embodiment of the disclosure.

### DETAILED DESCRIPTION

In order to accomplish the free scheduling of different services, such as, PTN service with flexible rate and OTN service with fixed rate, different services can be sliced in a uniform form and the signals obtained after the slicing are transmitted together over a backplane bus, wherein a service with high flow occupies more slices and a service with low flow occupies less slices. When sudden flow occurs, the number of slices of the service stream transmitted on the bus increases accordingly. Following description takes the PTN service and OTN service as examples.

Specifically, with reference to Fig. 3, in the equipment for free scheduling of OTN, PTN services, a service is accessed through a service access unit or several service access units, the accessed service enters into a uniform cross unit through a backplane bus in the form of uniform signal; after the uniform cross unit finishes service scheduling, the uniform backplane signal then enters into the service access unit through the backplane bus in the form of uniform signal, such that the scheduling is accomplished.

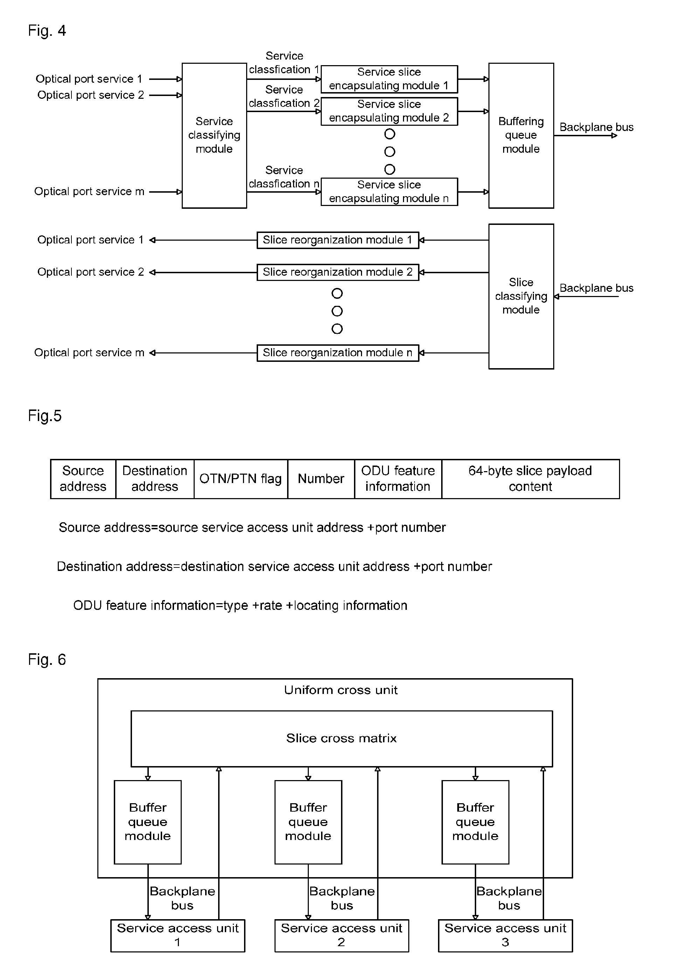

With reference to Fig. 4, in the service access unit, a service classifying module firstly classifies the services, different types of services then enter into corresponding service slice encapsulating modules, the service slice encapsulating modules slice different types of services into slices and encapsulate the slices into uniform frames, then the encapsulated frames enter into the backplane in the form of uniform signal through a buffer queue module and the backplane bus.

After the service access unit receives signals in the form of slice from the backplane, the slice classifying module firstly allocates slices of different types of services into corresponding slice reorganization modules, the slice reorganization modules then encapsulate the received slices again to form complete services and send them downstream.

With reference to Fig. 5, a uniform slice structure totally comprises two segments that are expenditure and payload, in which the expenditure includes a source address, a destination address, an OTN/PTN flag which can be called a service flag to distinguish different types of services, a slice serial number and ODU feature information, etc.

The source address and the destination address in the slice expenditure are used for cross scheduling, wherein the source address is composed of a source service access unit address and a source port, and the destination address is composed of a destination service access unit address and a destination port; the ODU feature information only includes ODU type, rate and locating information, and the slice serial number and OTN/PTN flag implement classification and reorganization of services.

With reference to Fig. 6, after a service enters into the uniform cross unit in the form of uniform slice structure, the slice cross matrix in the uniform cross unit parses the source address and the destination address in the slice expenditure to find a corresponding port in a cross matrix in order to cross schedule the slices, and after the scheduling, these slices then enter into the service access unit through the buffer queue module and the backplane bus. The buffer queue module may control the flow to prevent massive lose of data caused by service surges.

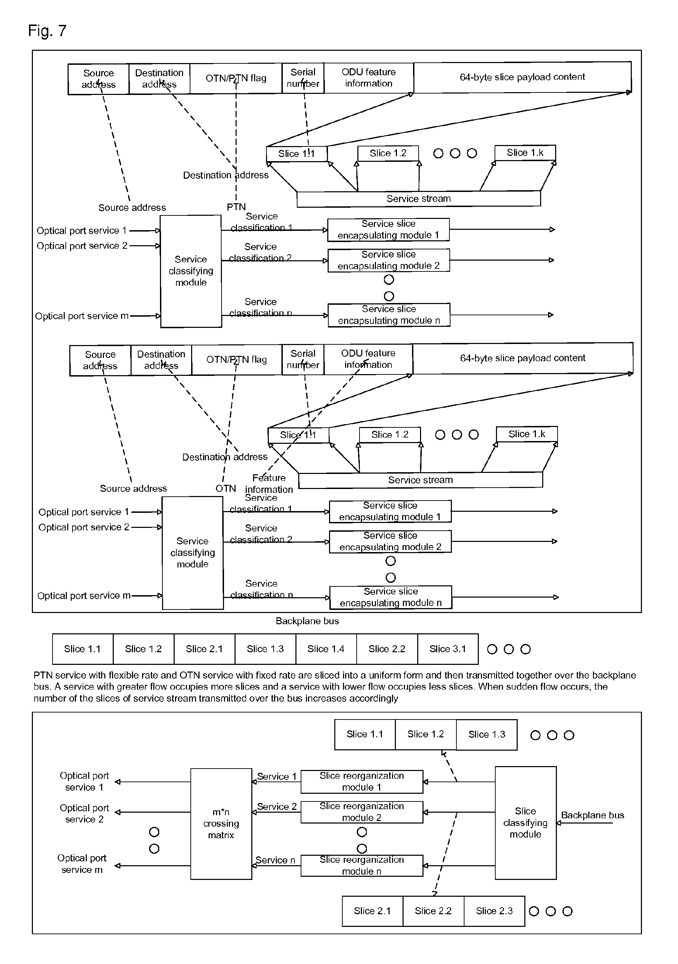

With reference to the embodiment of the disclosure shown in Fig. 7, in practical applications, a service enters into the service access unit through an optical port. In the service access unit, the service is firstly classified in the classifying module. With regard to a PTN service, the service encapsulating module encapsulates it into slices of payload of 64 bytes and sets a PTN flag, a source address, a destination address and a slice serial number for each slice, while ODU feature information is reserved. With regard to an OTN service, the service encapsulating module encapsulates it into slices of payload of 64 bytes and sets an OTN flag, a source address, a destination address, a slice serial number and ODU feature information for each slice. Slices which are formed in the end enter the uniform cross unit through the buffer queue module.

The uniform cross unit obtains the location of the service access unit through parsing, and crossly schedules the slices to corresponding access units.

When the slices enter into the service access unit through the backplane, the service classifying module separates the slices of services of the same type according to the OTN/PTN flag, slice serial number and ODU feature information, so as to form a sequence. The service slice encapsulating module removes expenditure information of the slices, re-forms a service, extracts the destination address of the optical port of the service, finally exchanges the newly formed services to various optical ports by the slice cross matrix and sends them downstream.

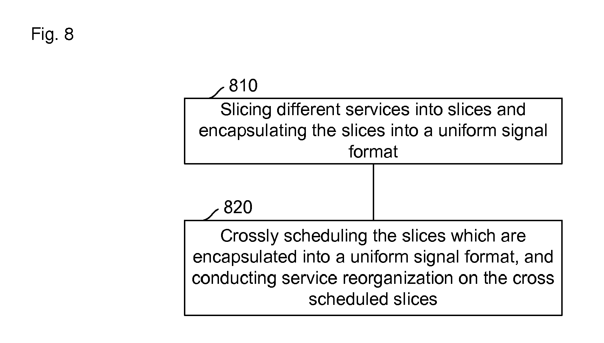

It can be seen in combination with the description above, the concept of implementing service scheduling in the disclosure can be presented as a flow chart in Fig. 8, which includes the following steps:
Step 810: slicing different services into slices and encapsulating the slices of the services into a uniform signal format;
Step 820: crossly scheduling the slices which are encapsulated into a uniform signal format, and conducting service reorganization on the slices after the cross scheduling.

It can be seen from the above that no matter whether it is a system or a method, the technology of implementing service scheduling in the disclosure is uniformly encapsulating different services by a uniform slice mechanism, so as to implement the uniform cross scheduling of service for different transmission networks, such as OTN, PTN, etc., and has the feature of high integration and even more broad scope of service to be applied; meanwhile, it increases the flexibility of network configuration, thus reducing the operating cost of service change and enhancing the product competitiveness.

What have been described are merely the embodiments of the disclosure, but not to limit the scope of the disclosure.

## Claims

1. A method for implementing service scheduling, comprising:
slicing different services into slices and encapsulating the slices into a uniform signal format; and crossly scheduling the slices which are encapsulated into the uniform signal format, and conducting service reorganization on the slices which have been completed the cross scheduling.

2. The method according to claim 1, wherein the slicing different services into slices and encapsulating the slices into a uniform signal format comprises:
classifying the services, slicing the services of various types into the slices and encapsulating the slices into a uniform frame.

3. The method according to claim 1, wherein the conducting service reorganization on the slices which have been completed the cross scheduling comprises:
re-encapsulating the slices of different types of services according to corresponding types of the services.

4. The method according to claim 1, wherein the slices each comprises expenditure and payload, in which the expenditure comprises a source address, a destination address, a service flag, a slice serial number and ODU feature information;
wherein the source address is composed of a source service access unit address and a source port, the destination address is composed of a destination service access unit address and a destination port; the ODU feature information comprises ODU type, rate and locating information; the ODU feature information, the slice serial number and the service flag implement classification and reorganization of services.

5. The method according to any of claims 1 to 4, wherein the crossly scheduling slices which are encapsulated into the uniform signal format comprises: crossly scheduling the slices according to the expenditure contained in the slices by using a slice cross matrix;
and the method also comprises buffering in a course in which slice transmission is needed.

6. A system for implementing service scheduling, comprising a service access unit and a uniform cross unit;
wherein the service access unit configured to slice different services into slices and encapsulate the slices into a uniform signal format, and conduct service reorganization slices which have been completed cross scheduling; and
the uniform cross unit is configured to crossly schedule the slices which are encapsulated into the uniform signal format.

7. The system according to claim 6, wherein the service access unit is configured to, when slicing different services into slices and encapsulating the slices into the uniform signal format, classify the services, slice various types of the services into slices and encapsulate the slices into a uniform frame.

8. The system according to claim 6, wherein the service access unit comprises a service classifying module and a service slice encapsulating module;
wherein the service classifying module is configured to classify the services; and the service slice encapsulating module is configured to slice the services of various types into slices and encapsulate the slices into a uniform frame.

9. The system according to claim 6, wherein the service access unit is configured to, when conducting service reorganization on the slices which have been completed the cross scheduling, re-encapsulate the slices of different types of services according to corresponding types of the services.

10. The system according to claim 9, wherein the service access unit comprises a slice classifying module and a slice reorganization module;
wherein the slice classifying module is configured to perform service classification on the received slices; and
the slice reorganization module is configured to re-encapsulate the slices of different types of services which have been completed the service classification, according to corresponding types of the services.

11. The system according to claim 6, wherein the slices each comprises expenditure and payload, in which the expenditure comprises a source address, a destination address, a service flag, a slice serial number and ODU feature information;
wherein the source address is composed of a source service access unit address and a source port, the destination address is composed of a destination service access unit address and a destination port; the ODU feature information comprises ODU type, rate and locating information, and the ODU feature information, the slice serial number and the service flag implement classification and reorganization of services.

12. The system according to any of claims 6 to 10, wherein the uniform cross unit comprises a slice cross matrix; the uniform cross unit is configured to crossly schedule the slices according to the expenditure contained in the slices by using a slice cross matrix when crossly scheduling the slices which are encapsulated into the uniform signal format; and
the system also comprises a buffer queue module configured to perform buffering in a course in which slice transmission is needed.
